Europäisches Patentamt

European Patent Office

Office européen des brevets

(19)

(11) Publication number: **0 165 672**

**A1**

(12) **EUROPEAN PATENT APPLICATION**

(21) Application number: **85302788.6**

(22) Date of filing: **22.04.85**

(51) Int. Cl.⁴: **A 01 C 11/02**

(30) Priority: **24.04.84 GB 8410421**

(43) Date of publication of application:
**27.12.85 Bulletin 85/52**

(84) Designated Contracting States:
**AT BE CH DE FR GB IT LI LU NL SE**

(71) Applicant: **Specialised Harvesting Services Limited
'This L Do' Coneygarth Lane
Doncaster Lincolnshire(GB)**

(72) Inventor: **Windle, Anthony B.
'This L Do' Coneygarth Lane
Haxey Doncaster DN9 2JH(GB)**

(74) Representative: **Wharton, Peter Robert et al,
P.R. Wharton & Co. Beckett's Bank Chambers 19
Cheapside
Bradford West Yorkshire BD1 4HR(GB)**

(54) **Planting apparatus.**

(57) A planting apparatus comprises a rotatable member 12, 40 rotated on forward movement of the apparatus and having means 14, 46 thereon for accepting seedlings 38 from a feed means for the seedlings so as to deposit the seedlings upright in the ground at intervals as the rotatable member 12, 40 rotates. The rotatable member may be an endless conveyor 12 or wheel-like member 40 providing a lowermost run to lie, in use of the device, substantially parallel to the ground. The member is rotated so that the bottommost run passes in the opposite direction to that which, in use, the device is to be drawn over the ground so that lowermost run is in effect stationary with respect to the ground. The means for accepting the seedlings comprise a plurality of generally box like receptacles 14, 46 having an open top to receive seedlings 38 and a movable side wall 16, 48 to release the seedlings. The receptacles 14, 46 are hingedly attached to the member so that each receptacle remains substantially vertical both on the bottommost run of the conveyor, and on the vertical run immediately preceding the bottommost run during which the seedlings 38 are loaded into the receptacle 14, 46. Means 36 are provided on the conveyor on the return run thereof to move the receptacles 16 into the correct orientation for the next successive cycle.

FIG.1.

EP 0 165 672 A1

## PLANTING APPARATUS

This invention relates to a planting apparatus and more specifically to apparatus for transplanting seedlings.

The invention is concerned with apparatus of the general type disclosed in European patent publication 0088518A. In one construction, an endless chain conveyor is trained about three sprockets to provide a bottommost run lying substantially parallel with the ground over which the apparatus is drawn and is arranged to rotate in the opposite sense to the movement of the planting apparatus which is being towed by a tractor or the like so that the botommost run remains substantially stationary with respect to the ground. Attached to the chain at predetermined intevals there-around are a plurality of plant supports. The supports are vertical along the bottommost run of the conveyor, and are horizontal on a vertical run. Feed means are arranged to feed individual seedlings into each successive plant support as it lies horizontally on the vertical run of the conveyor after which each support passes downwardly towards the bottommost run in which position it is arranged to deposit the plant into a previously formed furrow.

While the above arrangement may work reasonably with certain types of plant, the fact that it has to be loaded horizontally introduces limitations both as to speed of operation and to types of plant which can be transplanted using the apparatus.

The invention seeks to provide an improved apparatus of the above general type in which the above disadvantages are reduced or eliminated.

According to one aspect of the present invention there is provided planting apparatus which comprises a rotatable member rotated on forward movement of the apparatus and having means thereon for accepting seedlings from a feed means for the seedlings so as to deposit the seedlings upright in the ground at intervals as the rotatable member rotates, the rotatable member being an endless conveyor providing a lowermost run to lie, in use of the device, substantially parallel to the ground, meas for rotating the conveyor so that the lowermost run passes in the opposite direction to that which, in use, the device is to be drawn over the ground, characterised in that the means for accepting seedlings comprise a plurality of generally box-like receptacles having an open top to receive seedlings and a movable side wall to release seedlings, the receptacle being hingedly attached to the conveyor so that each receptacle remains substantially vertical both on the bottommost run of the conveyor and on the vertical run immediately preceding the bottommost run during which seedlings are loaded into the receptacles, and means being provided on the conveyor on the return run thereof to move the receptacles into the correct orientation for the next successive cycle.

According to a second aspect of the invention there is provided planting apparatus which comprises a rotatable member rotated on forward movement of the apparatus and having means thereon for accepting seedlings from a feed means for the seedlings so as to deposit the seedlings upright in the ground at intervals as the rotatable member rotates, the rotatable member being generally wheel-like in configuration characterised in that the wheel-like member carries a plurality of seedling receptacles hingedly attached thereto at intervals therearound in such a manner that they remain substantially vertical throughout the rotation of the wheel-like member, each receptacle being generally box-like, having an open or openable top to receive seedlings, and a moveable side wall to release seedlings the latter being operable in timed relationship with the rotation of the wheel-like member.

The apparatus of the invention allows the receptacles to be loaded with seedlings whilst in vertical orientation and so the seedlings may be loaded in an upright position from above which is considerably more convenient than the horizontal loading referred to in the above European patent application application. This enables the apparatus to be operated faster and a wide variety of plant types to be employed. The feeding arrangement for feeding seedlings to each receptacle in turn may conveniently comprise a carousel of turrets, each loaded with a seedling, indexed to revolve above the feeding point of the conveyor in timed relationship therewith so that a turret is in place above each receptacle as it in turn reaches the feeding station. The turrets will have means, for example hinged base means, for releasing the seedling contained therein at the correct point. Preferably, however, the turrets may comprise receptacles similar to those on the rotatable member, having a movable side wall operable in timed relation with rotation of the carousel to release successive seedlings.

The invention will be described further, by way of example, with reference to the accompanying drawings, in which:

Figure 1 is a schematic arrangement view of an apparatus according to the first aspect of the invention;

Figure 2 is a side view on an enlarged scale of a receptacle;

Figure 3 is a rear view of a receptacle of figure 2;

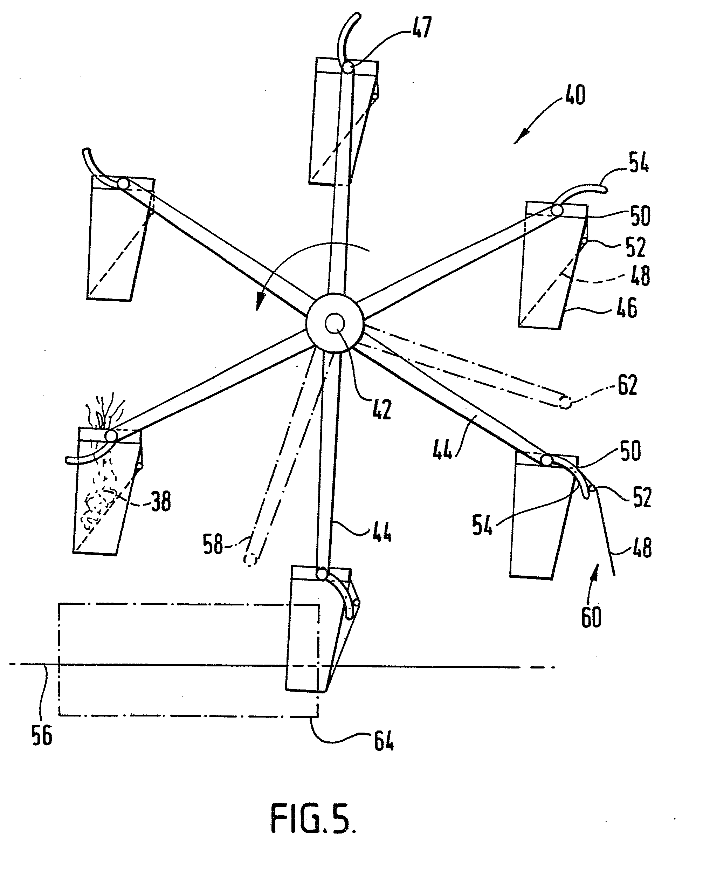

Figure 4 is a similar view to figure 2 showing the opening lever;

Figure 5 is a diagrammatic view of an apparatus according to the second aspect of the invention; and

Figure 6 is a view of part of a carousel suitable for use with the apparatus.

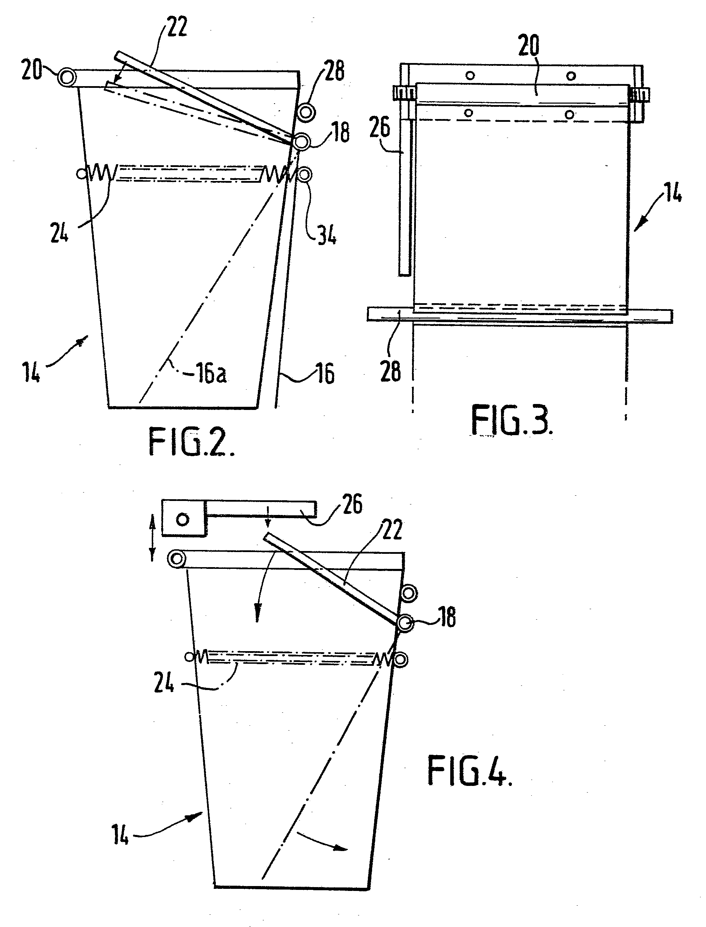

Referring to the drawings, it can be seen that the apparatus generally designated 10 comprises an endless chain conveyor 12 mounted on four conveyor wheels, one of which may be driven by suitable means (not shown). Attached to the chain at spaced intervals by suitable bracket means are a series of generally box-like receptacles 14. The receptacles 14 have an open top and a side 16 hinged at 18 opposite to the point at which the receptacle 14 is attached to the conveyor. The latter is accomplished by means of a hinge 20 fixed to the bracket on the chain conveyor. The hinged side 16 carries an external operating lever 22 as well as a biasing spring 24 to maintain the movable side 16 in the position shown at 16a in figure 2.

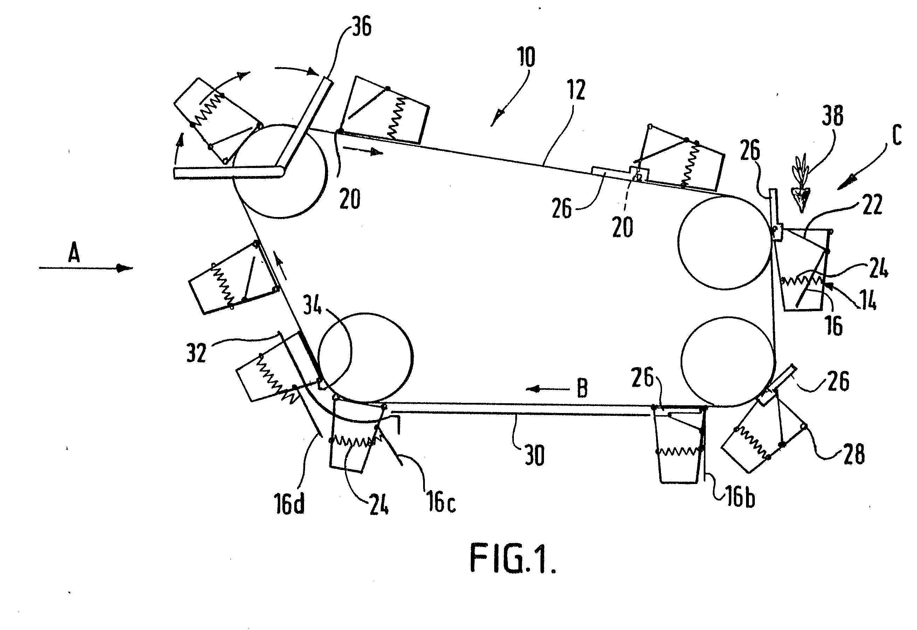

Attached to the same bracket on the chain 12 is an operating abutment or lever 26 (omitted from some of the receptacles 14 shown in figure 1 for clarity) which moves with the chain and actuates the side operating lever 22 as described more fully hereinafter.

A pin 28 extends laterally on each side of the receptacle 14 and is designed to cooperate with a guide rail or slide 30 adjacent the bottommost run of the conveyor 12 and serves to maintain the receptacles 14 in an upright position along the bottommost run. A further guide rail or abutment 32 is provided at the end of the bottommost run of the conveyor 12 which cooperates with a further pin 34 attached to the opening side 16 of the cup and serves to open that side 16 fully against the bias of the spring 24 so as to release the plant or seedling contained therein.

On the return run of the conveyor the receptacles 14 are oriented in a position such that their top openings are obscured by the conveyor and in order to re-orient them in the correct position a lever 36 is provided which rotates somewhat faster than the speed of the conveyor and cooperates with the pin 28 whereby to 'flip over' the receptacles 16 so that each is then in its correct orientation to proceed to the next feeding run.

In use, the apparatus is towed in the direction of arrow A by suitable means such as a tractor and the conveyor rotates in the direction indicated by arrow B. As each receptacle 16 in turn reaches the position indicated by arrow C (the 'feed station') a seedling 38 is dropped therein from a suitable feed means such as that shown in Figure 5 and discussed generally herein above. At this point the lid 16 is, under the bias of the spring 24, at or close to the position indicated at 16a in figure 2 thereby closing off the base of the receptacle 14 and holding the seedling securely therein.

Following this receptacle as the chain conveyor 12 continues to rotate, the bottommost conveyor wheel is reached and the receptacle 14 will start to tilt. At this point the pin 28 comes into contact with the slide 30 which then maintains the receptacles 14 in the proper vertical orientation. The abutment 26 however continues to rotate and comes into contact with the lid operating lever 22 thereby moving the lid from the position shown at 16a to that shown at 16b in figure 1. The speed of rotation of the conveyor 12 is geared so as to compensate exactly for the speed of towing of the planting apparatus so that the bottommost run is stationary with respect to the ground. As the conveyor continues to move and reaches the end of the bottommost run the lid pin 34 comes into contact with the guide 32 causing the side 16 to open fully to the position shown respectively at 16c and 16d of figure 1. This position allows the seedling held therein to be released without danger of the foliage becoming entangled since the opening of the side is extremely wide and the seedling can be releasd extremely well. As each receptacle continues on the upward run it reaches the uppermost conveyor wheel carrying the abutment lever 36 which flips each receptacle over and presents it in the correct orientation for when it next reaches the feed station c.

The uppermost run of the conveyor is shown in figure 1 to slope downwardly toward the feed station somewhat and this is advantageous since, were the topmost run flat, the apparatus might not work correctly should the land surface being planted slope. By climbing downwardly towards the feed station at the topmost run at an angle greater than any slope likely to be encountered, it can be ensured that the receptacles reach the feed station at a proper orientation. The cycle is repeated for each successive receptacle which are spaced on the conveyor according to the desired spacing of the plants being transplanted.

Referring now to figure 5, the conveyor 10 is replaced by a wheel-like member 40, rotatably mounted on an axle 42 and having, in this case, six spokes 44 each carrying a receptacle 46 hingedly attached at the extremity thereof 47. The receptacles 46 are generally similar to the receptacles 14 described above. One side-wall 8 is movable, being pivotally mounted at 50 to the receptacle 46. This side-wall 48 is angled, and carries an abutment rod 52 which cooperates with a cam 54 fitted to each spoke 44. The side-walls 48 are biased towards the closed position by means of springs or rubber bands (not shown), in a similar manner to receptacle 14.

In operation, the member 40 is mounted on a suitable framework capable of being towed by a tractor or the like and arranged to rotate wuch that the receptacle for the time being at the bottom is stationary with respect to the ground, as before. At the top of member 40 a seedling is dropped into a receptacle 46 and, as the member 40 revolves in the direction of the arrow, it approaches the soil level 56. Just before doing so, at the position indicated at 58, the cam 54 contacts the rod 52 and pushes it away from the body of the receptacle against the bias of the spring, so starting to open the bottom of the receptacle. Further rotation fully opens the bottom of the receptacle to the position shown at 60 which is sufficient to clear the foliage of the seedling 38. The latter position can be atered by adjusting the cam 54 and/or the rod 52 and side wall 48. When the point 62 is reached, the rod 52 leaves the cam 54 and side-wall 48 snaps shut once again ready to receive a new seedling 38.

One advantage of the above arrangement as well as vertical loading, is that the receptacle supports the seedling on three sides all through the zone 64, during which soil can be directed around its roots by means of suitably placed harrow wheels, thereby ensuring that it is securely planted.

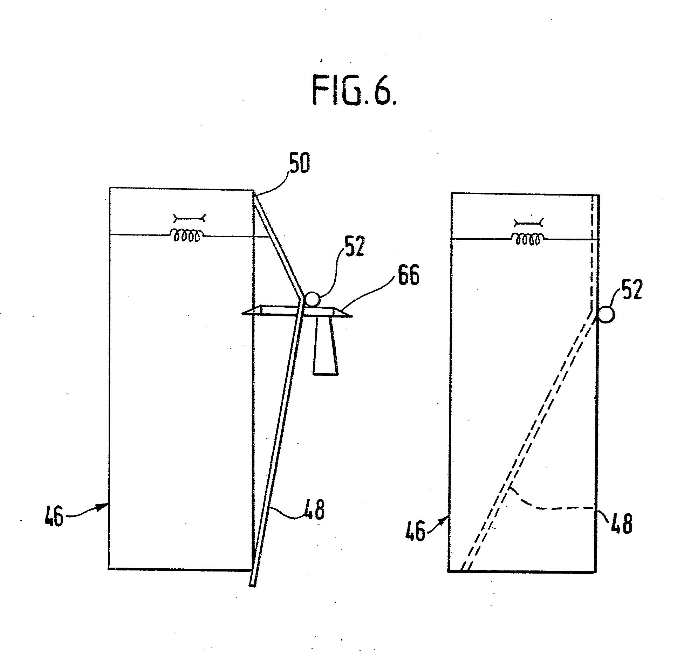

In figure 6 there is illustrated part of a carousel arrangement comprising a number of turrets mounted for horizontal rotation. Each turret comprises a receptacle 46 as described in figure 5 above, and like numerals will be used for like parts. Instead of the cams 54, fixed camming surfaces 66 are provided adjacent the feed station at which each successive turret is over the corresponding receptacle on the rotatable member 12, 40, so as to open up the bottom by camming out the side-wall 48 at this point and allowing the seedling to drop into the receptacle in the rotatable member.

The seedlings being fed in a vertical orientation greatly speeds up the feeding operation so that the speed of the operation of the apparatus can be increased greatly. Furthermore, the exact shape of the receptacle can be varied and since the side opening 16 is arranged to be great, a wide variety of seedlings and plants can be accommodated.

0165672

## CLAIMS

1. A planting apparatus which comprises a rotatable member rotated on forward movement of the apparatus and having means thereon for accepting seedlings from a feed means for the seedlings so as to deposit the seedlings upright in the ground at intervals as the rotatable member rotates, the rotatable member being an endless conveyor providing a lowermost run to lie, in use of the device substantially parallel to the ground, means for rotating the conveyor so that the lowermost run passes in the opposite direction to that which, in use, the device is to be drawn over the ground, characterised in that the means for accepting seedlings comprise a plurality of generally box-like receptacles each having an open top to receive seedlings and a movable side wall to release seedlings, the receptacles being hingedly attached to the conveyor such that each receptacle remains substantially vertical both on the bottommost run of the conveyor and on the vertical run immediately preceding the bottommost run during which the seedlings are loaded into the receptacles, and means being provided on the conveyor on the return run thereof to move the receptacles into the correct orientation for the next successive cycle.

2. An apparatus as claimed in claim 1 in which a slide is provided parallel with the bottommost run of the conveyor cooperates with a pin carried by each receptacle to maintain the receptacle in the vertical position along the bottommost run.

3. An apparatus as claimed in either of claims 1 or 2 wherein each receptacle carries a pin near or at the top on the side away from that hingedly attached to the conveyor which cooperates with a lever arranged to rotate somewhat faster than the speed of the conveyor whereby to flip over the receptacles so that each is in its correct orientation to proceed to the next feeding run.

4. An apparatus as claimed in any one of claims 1 to 3 whereby the uppermost run of the conveyor is tilted downwardly toward a feeding station at which seedlings are placed in each successive receptacle.

5. An apparatus as claimed in any one of claims 1 to 4 in which a guide is located towards the end of the bottommost run of the conveyor which cooperates with a pin on the movable side of the receptacle to ensure that the lid is fully opened to the widest position as the receptacle leaves the bottommost run.

6. A planting apparatus which comprises a rotatable member rotated on forward movement of the apparatus and having means thereon for accepting seedlings from a feed means so as to deposit the seedlings upright in the ground at intervals as the rotatable member rotates, the rotatable member being generally wheel-like in configuration characterised in that the wheel-like member carries a plurality of seedling receptacles hingedly attached thereto at intervals there-around in such a manner that they remain substantially vertical throughout the rotation of the wheel-like member, each receptacle being generally box-like, having an open or openable top to receive seedlings, and a movable side-wall to release seedlings, the latter being operable in timed relation with the rotation of the wheel-like member.

7. An apparatus as claimed in any of claims 1 to 6 in whih the receptacle is hingedly attached to the member close to or at the top thereof.

8. An apparatus as claimed in any of claims 1 to 7 in which an abutment or cam moving with the rotatable member cooperates with an operating lever or rod on each receptacle whereby to open the movable side wall to release the seedlings.

9. An apparatus as claimed in any one of claims 1 to 8 in which a feeding arrangement for feeding seedlings to each receptacle in turn comprises a carousel of turrets each loaded with a seedling indexed to revolve above the feeding station of the conveyor in timed relationship therewth so that a turret is in place above each receptacle as it in turn reaches the feeding station whereby to deposit a seedling therein.

10. An apparatus as claimed in claim 9 in which each turret is a box-like receptacle having a movable side-wall aranged to be cammed open at the feed station.

FIG.1.

FIG.2.

FIG.3.

FIG.4.

FIG.5.

FIG.6.

# EUROPEAN SEARCH REPORT

European Patent Office

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-3 103 186  (SAIFUKU)<br>* Column 2, lines 6-72; column 3; column 4; column 5, lines 1-14; figures 1-3 * | 1,2,5 | A 01 C   11/02 |
| A,D | EP-A-0 088 518  (WINDLE)<br>* Claims 1-3; figures 2,9 * | 1-6 | |
| A | DE-C- 422 252  (BLASS)<br>* Whole document * | 1 | |
| | ----- | | |

TECHNICAL FIELDS
SEARCHED (Int. Cl.4)

A 01 C

The present search report has been drawn up for all claims

| Place of search | Date of completion of the search | Examiner |
|---|---|---|
| THE HAGUE | 20-01-1985 | VERMANDER R.H. |